Europäisches Patentamt

European Patent Office

Office européen des brevets

(19)

(11) Veröffentlichungsnummer: **0 144 778**
**A2**

# (12) EUROPÄISCHE PATENTANMELDUNG

(21) Anmeldenummer: 84113429.9

(22) Anmeldetag: 07.11.84

(51) Int. Cl.⁴: **A 47 J 43/25**

(30) Priorität: 14.12.83 DE 3345300

(43) Veröffentlichungstag der Anmeldung:
19.06.85 Patentblatt 85/25

(84) Benannte Vertragsstaaten:
AT BE CH DE FR GB IT LI LU NL SE

(71) Anmelder: ELM-Plastic GmbH
Phillippsheimer Strasse 15
D-5521 Dudeldorf(DE)

(72) Erfinder:
Die Erfinder haben auf ihre Nennung verzichtet

(74) Vertreter: Lorenz, Eduard
Rechtsanwälte Eduard Lorenz - Bernhard Seidler Margrit
Seidler - Dipl.-Ing. Hans-K. Gossel Dr. Ina Philipps - Dr.
Paul B. Schäuble Dr. Siegfried Jackermeier
Widenmayerstrasse 23 D-8000 München 22(DE)

(54) Halter für zu zerkleinernde Nahrungsmittel.

(57) Ein Halter für Zwiebeln, Früchte, Gemüse oder andere auf einer Reibe oder einem Schneidhobel zu zerkleinernde Nahrungsmittel besteht aus einem hutförmigen Gehäuse, das im mittleren Bereich seiner Deckplatte mit einem Durchbruch versehen ist, in dem ein Stempel axialverschieblich geführt ist. Der Stempel trägt oberhalb der Deckplatte eine Betätigungsplatte und unterhalb von dieser eine Druckplatte. In dem Rand des Durchbruchs sind parallel zu dem Stempel in das Gehäuseinnere ragende Haltestifte befestigt, die die Druckplatte in Bohrungen durchsetzen. Um die zu zerkleinernde Frucht oder dergleichen unabhängig von ihrer jeweiligen Größe während der Schneid- oder Reibarbeit spielfrei in dem Gehäuse halten zu können, sind in der zylindrischen oder konischen Wandung (2) des Gehäuses (1) auf gegenüberliegenden Seiten gegeneinander bewegliche Backen angeordnet, die durch außenliegende Betätigungseinrichtungen gegeneinander drückbar sind.

Fig. 2

EP 0 144 778 A2

elm-plastic GmbH,
5521 Dudeldorf

---

**Halter für zu zerkleinernde Nahrungsmittel**

---

Die Erfindung betrifft einen Halter für Zwiebeln, Früchte,
Gemüse oder andere auf einer Reibe oder einem Schneidhobel zu
zerkleinernde Nahrungsmittel, bestehend aus einem hutförmigen
Gehäuse, das im mittleren Bereich seiner Deckplatte mit einem
Durchbruch versehen ist, in dem ein Stempel axial verschieblich
geführt ist, der oberhalb der Deckplatte eine Betätigungsplatte
und unterhalb von dieser eine Druckplatte trägt, wobei in dem
Rand des Durchbruchs parallel zu dem Stempel in das Gehäuseinnere ragende Haltestifte befestigt sind, die die Druckplatte
in Bohrungen durchsetzen.

Bei beispielsweise aus den DE-OS 17 29 908 und 28 23 337 bekannten Haltern dieser Art wird die zu zerkleinernde Frucht oder dergleichen auf die Haltestifte aufgespießt und von diesen entsprechend dem Schneidfortschritt durch die Druckplatte des Stempels
abgeschoben, wobei das Gehäuse den Griffbereich und der den
zylindrischen Teil des Gehäuses umgebende scheibenförmige Rand
einen Fingerschutz bilden. Da bei den bekannten Haltern die
Stifte die zu zerkleinernde Frucht im Innern des Gehäuses halten, werden sie bei der hin- und hergehenden Schneidbewegung
hohen Biegebeanspruchungen ausgesetzt, wobei diese Stifte üblicherweise während des Gebrauchs so weit ausgebogen werden, bis
die Frucht an der Gehäusewandung ein Widerlager findet. Durch
das Hin- und Herbewegen der Frucht in dem Gehäuse beim Schneiden wird die Schneid- oder Reibarbeit erschwert, wobei sich das
Spiel der Frucht in dem Gehäuse unangenehm bemerkbar macht und
sich auch ungleichmäßige Schnittflächen ergeben.

Aufgabe der Erfindung ist es daher, den Halter der eingangs angegebenen Art in der Weise zu verbessern, daß die zu zerkleinernde
Frucht oder dergleichen unabhängig von ihrer jeweiligen Größe
während der Schneid- oder Reibarbeit spielfrei in dem Gehäuse
gehalten ist.

Erfindungsgemäß wird diese Aufgabe dadurch gelöst, daß in der
zylindrischen oder konischen Wandung des Gehäuses auf gegenüberliegenden Seiten gegeneinander bewegliche Backen angeordnet
sind, die durch außenliegende Betätigungseinrichtungen gegeneinander drückbar sind. Bei dem erfindungsgemäßen Halter lassen
sich zugleich mit dem Ergreifen des Gehäuses über die außenliegenden Betätigungseinrichtung auch die Backen im Innern des Gehäuses gegeneinander drücken, so daß die zu zerkleinernde Frucht
zwischen diesen Backen festgeklemmt wird. Der die Frucht ausschiebende Stempel läßt sich in der üblichen Weise betätigen,
so daß die Frucht unabhängig von ihrer seitlichen Einklemmung entsprechend dem Schneidfortschritt vorgeschoben werden kann.
Da es der erfindungsgemäße Halter gestattet, die zu zerkleinernde Frucht gleichsam über die beweglichen Backen zu ergreifen,
hat die Bedienungsperson ein sehr viel besseres Gefühl für die
Schneidarbeit und den Schneidfortschritt.

Mit Klemmbacken versehene Fruchthalter sind an sich aus den
US-PS 22 07 286 und 25 02 739 bekannt. Diese bekannten Fruchthalter ermöglichen zwar ein gutes Festklemmen der Frucht, sie
gestatten es andererseits aber nicht, die Frucht entsprechend
dem Schneidfortschritt aus dem Halter herauszuschieben.

Nach einer vorteilhaften Ausgestaltung ist vorgesehen, daß die
Backen durch sektorartige Gehäuseausschnitte gebildet sind, die
gelenkig mit der Deckplatte des Gehäuses verbunden sind. Diese
Ausgestaltung ist besonders einfach, da klappenartige Gehäuseteile die gegeneinander beweglichen Backen bilden, wobei die
außenliegenden Flächen die einfach zu ergreifenden Betätigungseinrichtungen bilden.

Zweckmäßigerweise befindet sich die gelenkige Verbindung im
Bereich des verstärkten Randes des Durchbruchs der Deckplatte.
Wenn, wie üblich, das Gehäuse aus Kunststoff besteht, können die
Gelenke durch Filmscharniere gebildet werden.

In weiterer Ausgestaltung der Erfindung ist vorgesehen, daß der
sektorartige Ausschnitt am unteren Rand der zylindrischen oder
konischen Wandung endet und der untere Rand des Ausschnitts mit
zahnartigen radialen Fortsätzen versehen ist, die zwischen entsprechende entgegengesetzt gerichtete Zähne greifen, die mit dem
äußeren Randbereich des scheibenförmigen äußeren Gehäuserandes
verbunden sind. Die Zähne überlappen einander so weit, daß sie
trotz einwärts gedrückter sektorartiger Gehäuseausschnitte einen gitterartigen Schutz bilden, der es verhindert, daß die Bedienungsperson durch den durch das Einwärtsdrücken des Gehäuseausschnitts geschaffenen Spalt mit ihren Fingern in den Messerbereich geraten kann.

Zweckmäßigerweise ist das Gehäuse mit einem Z-förmigen Rand
versehen, wobei die ineinandergreifenden Zähne in dessen oberem
flanschförmigen Teil vorgesehen sind. Dabei kann der obere
Flansch flach konisch nach innen hin geneigt sein und als Fingerauflage dienen.

In anderer Ausgestaltung der Erfindung können die beweglichen
Backen auch durch in der Gehäusewand axial verschieblich gelagerte Schieber oder mit Druckplatten versehene Stempel gebildet
sein. Eine derartige Ausgestaltung ist allerdings konstruktiv
aufwendiger.

Es ist auch möglich, den Halter ohne Haltestifte auszubilden,
weil die Frucht ausreichend zwischen den Haltebacken festgelegt
werden kann.

Ein Ausführungsbeispiel der Erfindung wird nachstehend anhand
der Zeichnung näher erläutert. In dieser zeigt

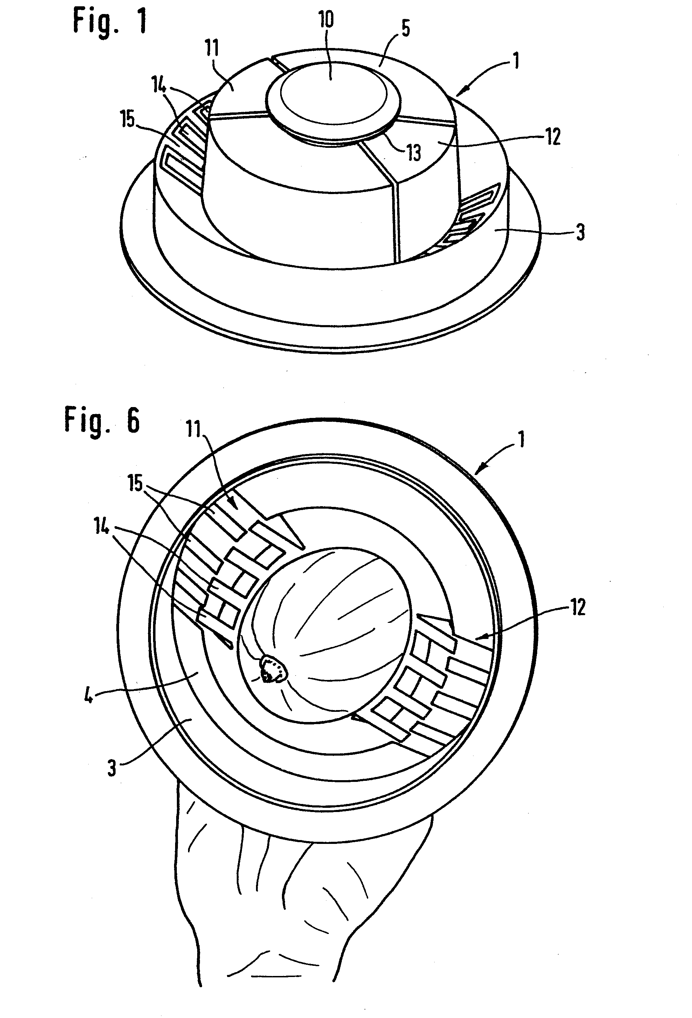

Fig. 1        eine perspektivische Ansicht des Halters,

Fig. 2        einen Querschnitt durch den Halter nach
              Fig. 1,

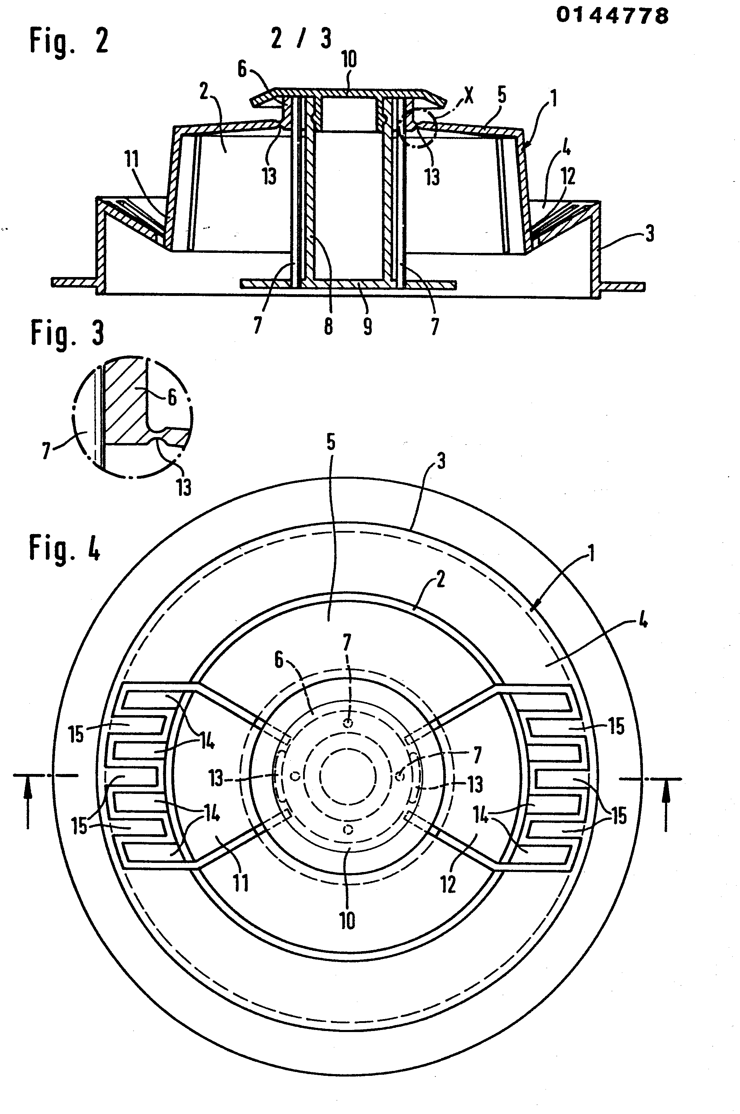

Fig. 3        eine vergrößerte Ansicht des Filmscharniergelenks,

Fig. 4        eine Draufsicht auf den Halter,

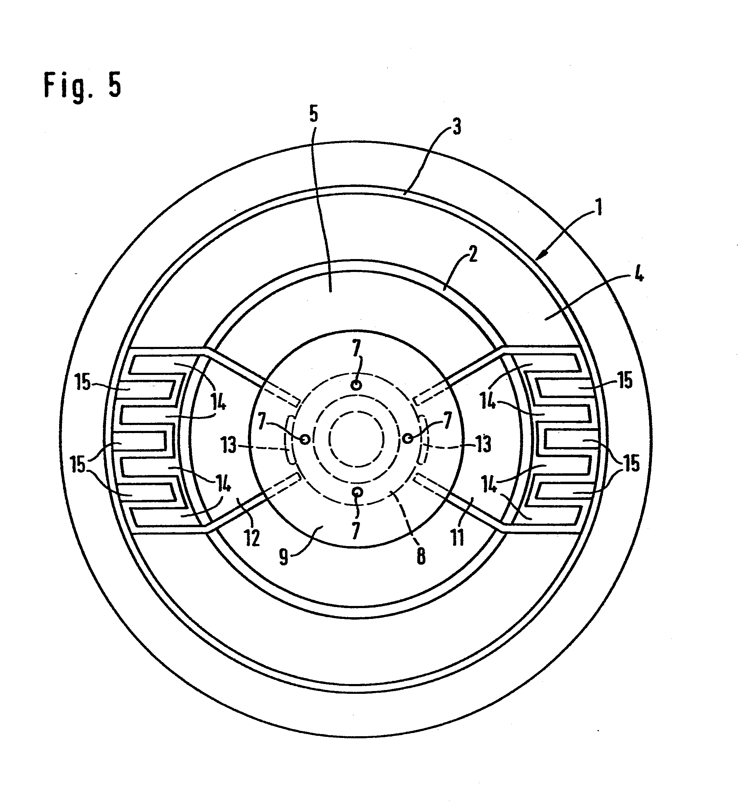

Fig. 5        eine Unteransicht des Halters und

Fig. 6        eine perspektivische Unteransicht des
              Halters.


Der Halter besteht aus einem hutförmigen Gehäuse 1 mit einer
kegelstumpfförmigen Gehäusewandung 2. An den unteren Rand des
kegelstumpfförmigen Gehäuseteils 2 ist ein umlaufender Z-förmiger Rand 3 angesetzt. Der obere Flansch 4 des Randes 3 ist
leicht konisch nach innen geneigt. Die Deckplatte 5 des Gehäuses
ist mit einem zentralen Durchbruch mit einem verstärkten Rand
6 versehen. In diesem verstärkten Rand 6 sind vier axial verlaufende Haltestifte 7 befestigt. In dem Durchbruch ist ein Stempel
8 axial verschieblich geführt, der an seinem unteren Ende mit
einer Druckplatte 9 versehen ist. An seinem oberen Ende trägt
der Stempel 8 eine Betätigungsplatte 10. Die Druckplatte ist mit
Bohrungen versehen, die die Haltestifte 7 durchsetzen.

Die Deckplatte 7 und die Seitenwandung 2 sind mit einander
gegenüberliegenden sektorartigen Ausschnitten 11, 12 versehen.
Diese Ausschnitte sind an ihren oberen Enden durch Filmscharniergelenke 13 mit dem verstärkten Rand 6 des Durchbruchs gelenkig
verbunden. An ihren unteren Rändern tragen die sektorartigen
Ausschnitte 11, 12 zahnartige Fortsätze 14, die zwischen entsprechend entgegengesetzte Zähne greifen, die mit dem Rand 3
verbunden sind und sich etwa über den Bereich des Flansches 4
erstrecken. Die Zähne 14, 15 bilden gleichsam ein Schutzgitter,
das verhindert, daß die Bedienungsperson bei der Arbeit durch
einen Spalt greifen kann, der sich beim Einwärtsdrücken der
sektorartigen Ausschnitte 11, 12 bildet.

14.12.1983
82 631   G-die

elm-plastic GmbH,
5521 Dudeldorf

---

Halter für zu zerkleinernde Nahrungsmittel

---

_ 1 _

**Patentansprüche:**

1. Halter für Zwiebeln, Früchte, Gemüse oder andere auf einer
   Reibe oder einem Schneidhobel zu zerkleinernde Nahrungsmittel, bestehend aus einem hutförmigen Gehäuse, das im
   mittleren Bereich seiner Deckplatte mit einem Durchbruch
   versehen ist, in dem ein Stempel axial verschieblich geführt
   ist, der oberhalb der Deckplatte eine Betätigungsplatte und
   unterhalb von dieser eine Druckplatte trägt, wobei in dem
   Rand des Durchbruchs parallel zu dem Stempel in das Gehäuseinnere ragende Haltestifte befestigt sind, die die Druckplatte in Bohrungen durchsetzen, dadurch gekennzeichnet,

- 2 -   **0144778**

daß in der zylindrischen oder konischen Wandung (2) des Gehäuses (1) auf gegenüberliegenden Seiten gegeneinander bewegliche Backen angeordnet sind, die durch außenliegende Betätigungseinrichtung gegeneinander drückbar sind.

2. Halter nach Anspruch 1, dadurch gekennzeichnet, daß die Backen durch sektorartige Gehäuseausschnitte (11, 12) gebildet sind, die gelenkig mit der Deckplatte (5) verbunden sind.

3. Halter nach Anspruch 2, dadurch gekennzeichnet, daß sich die gelenkige Verbindung im Bereich des verstärkten Randes (6) des Durchbruchs der Deckplatte befindet.

4. Halter nach einem der Ansprüche 1 bis 3, dadurch gekennzeichnet, daß das Gehäuse aus Kunststoff besteht und die Gelenke durch Filmscharniere (13) gebildet sind.

5. Halter nach einem der vorhergehenden Ansprüche, dadurch gekennzeichnet, daß der sektorartige Ausschnitt (11, 12) am unteren Rand der zylindrischen oder konischen Wandung (2) endet und der untere Rand des Ausschnitts mit zahnartigen radialen Fortsätzen (14) versehen ist, die zwischen entsprechend entgegengesetzt gerichtete Zähne (15) greifen, die mit dem äußeren Randbereich des scheibenförmigen äußeren Gehäuserandes verbunden sind.

6. Halter nach einem der vorhergehenden Ansprüche, dadurch gekennzeichnet, daß das Gehäuse (1) mit einem Z-förmigen Rand (3) versehen ist und die ineinandergreifenden Zähne (14, 15) in dessen oberen flanschförmigen Teil (4) vorgesehen sind.

7. Halter nach Anspruch 6, dadurch gekennzeichnet, daß der obere Flansch (4) konisch nach innen hin geneigt ist.

8. Halter nach Anspruch 1, dadurch gekennzeichnet, daß die beweglichen Backen durch in der Gehäusewand axial verschieblich gelagerte Schieber oder mit Druckplatten versehene Stempel gebildet sind.

0144778

Fig. 1

Fig. 6

0144778

**Fig. 2**

**Fig. 3**

**Fig. 4**

Fig. 5